# EUROPEAN PATENT SPECIFICATION

(11) **EP 1 778 487 B1**
(45) Date of publication and mention of the grant of the patent: **28.08.2013**
(21) Application number: 05771635.9
(22) Date of filing: 25.07.2005
(51) Int. Cl.: B32B 37/12, B32B 21/08, B32B 37/16

(54) **MOISTURE-BARRIER COATING MATERIAL, A SHEET-LIKE PRODUCT COATED WITH THIS AND METHODS OF MANUFACTURING THESE**
FEUCHTIGKEITSSPERRENBESCHICHTUNGSMATERIAL, DAMIT ÜBERZOGENES FLÄCHIGES PRODUKT UND HERSTELLUNGSVERFAHREN DAFÜR
MATIERE DE REVETEMENT A L'EPREUVE DE L'HUMIDITE, PRODUIT EN FEUILLE REVETU DE LADITE MATIERE, ET LEURS PROCEDES DE PRODUCTION

(30) Priority: 27.07.2004 FI 20041027
(43) Date of publication of application: 02.05.2007
(73) Proprietor: Kotkamills Oy, 48101 Kotka (FI)
(72) Inventor: LANKI, Sanna, FI-46860 Anjalankoski (FI); LAITINEN, Risto, FI-55420 Imatra (FI)
(74) Representative: Berggren Oy Ab
(86) International application number: PCT/FI2005/000340
(87) International publication number: WO 2006/010788

(56) References cited:
- EP-A1- 1 083 044
- WO-A1-99/17930
- JP-A- 11 058 622
- US-A- 3 663 353
- US-A- 4 064 297
- US-A- 4 865 912
- US-A- 5 866 209
- US-B1- 6 451 444

## Description

The invention relates to a moisture-barrier coating material and to a method for manufacturing it. The invention also relates to a sheet-like product coated with this material and to a method for manufacturing it.

A fibre-based rigid sheet material, which may be made of wood, plywood, oriented strand board (OSB), chipboard, fibre board or the like, is used as a floor or wall panel in spaces exposed to moisture, as various outdoor bases and in casting moulds receiving concrete or similar water-containing masses. Such purposes of use require moisture shield of the sheet by means of a suitable moisture-barrier coating.

It is previously known to use Kraft paper impregnated with impregnation resin as the moisture-barrier coating of a sheet-like product, the Kraft paper having been preliminary dried with hot air and subsequently adhered to the surface of the sheet to be shielded by lamination under heat and compression. However, this procedure achieves deficient moisture shield and weather resistance of the product.

FI patent specification 110495 B describes a fibre-based sheet, to which one or more thermoplastic films have been connected to act as a moisture barrier and to provide improved wear resistance. In accordance with this reference, a sheet-like product is produced by assembling a fibre-based plate, a paper impregnated with reactive glue or any similar size layer and thermoplastic films forming a composition, whose layers are interconnected by hot pressing. The reference states that the mutual adhesion between the size layer and the uppermost thermoplastic layer has been especially enhanced by an interposed polyamide film during lamination.

US patent specification 3,556,915 discloses the production of a sheet intended as decorative coating, in which paper layers impregnated with resin and an interposed barrier plastic layer form a composition, which is compressed under pressure at 135 to 150 °C. The sheet thus obtained can be fixed as a coating on a substrate by usual methods. US patent specification 4,865,912 further discloses a coating material assembled from layers of impregnated paper, thermoplastic or similar materials, which is intended for attachment by means of an adhesive layer to a sheet-like backing material, such as plywood. The production of the coating material can take place as a continuous process, in which the thermoplastic layers are extruded between the web-like layers and the layers adhere to each other by compression between rolls.

The methods for preparing such sheet-like end products comprising a protective plastic layer have the common feature of requiring at least three material layers to be joined on top of each other, with at least one layer having the task of acting as a binder between the other layers. This joining step typically consists of lamination of the composition of successive layers under heat and pressure.

The invention has the purpose of finding a solution for simplifying the production of a sheet-like product coated with a plastic layer and acting as a moisture barrier, while allowing further reinforcement of the bond between the fibrous plate acting as a substrate in the product and said coating material comprising a plastic layer. The invention has thus achieved a coating material comprising a plastic layer, which can be adhered by lamination to a sheet-like substrate as such, without any intermediate binder or size layer. The method for producing a moisture-barrier coating material in accordance with the invention is especially characterised by a layer made of absorbent carrier being connected with a plastic layer, by the carrier being subsequently treated with a reactive impregnating resin, with the resin absorbed through the carrier layer into contact with the plastic layer, and by the impregnating resin being eventually dried.

In the invention, the drying of the impregnating resin preferably forms a preliminary drying step, in which the resin retains reactive, cross-linkable groups, which are activated as the coating material is laminated to a substrate formed of a rigid fibre-based sheet. During lamination, the cross-links form a bond between the parts to be joined so that no separate size layer will be necessary. At the same time, one single joint will be formed during lamination, instead of two or several joints as previously.

The coating material achieved as described above in accordance with the invention is characterised by comprising a carrier layer impregnated with reactive impregnating resin and a plastic layer in contact with the resin, the impregnating resin having been pre-dried so as to retain reactive cross-linkable groups.

In all, the method of the invention for preparing a sheet-like product coated with a moisture barrier, in which the coating material mentioned above is an intermediate product, is characterised by a plastic layer being connected to the absorbent carrier, by the carrier being subsequently treated with a reactive impregnating resin so that the resin is absorbed through the carrier layer into contact with the plastic layer, by the absorbed impregnating resin being pre-dried so as to retain reactive, cross-linkable groups, and by the layered coating material thus obtained being bonded under heat and pressure to a rigid fibre-based plate, so that the cross-linkable impregnating resin contained in the carrier layer contacted with the surface of the sheet acts as a binder between the coating and the sheet.

In accordance with the invention, the sheet-like product prepared as above and forming the end product is characterised by comprising a rigid fibre-based sheet and a layered coating attached to this, the coating comprising at least one plastic layer and at least one layer formed of a carrier and of impregnating resin absorbed into this so that the cross-linked resin forms a bond between the sheet and the plastic layer included in the coating.

In accordance with the invention, the coating material can be prepared in a continuously operating process, in which the plastic layer is connected with the carrier path and the impregnating resin is absorbed into the carrier path in continuous on-line movement. A suitable carrier consists especially of absorbent paper, such as Kraft paper, but also boards, textiles, glass fibre and non-woven materials are usable.

The plastic layer can be connected with the carrier path by extrusion, which allows for easy control of the layer thickness and even for a very thin layer if desired. Usable plastics comprise thermoplastic, such as e.g. low-density polyethylene (LDPE), high-density polyethylene, polypropylene and other polyolefins, polyesters, polyamides, polyvinyl chloride, polystyrene, acrylic plastics etc. Plastic acts as a moisture barrier and in a molten state, it adheres to paper, board or a similar carrier without any binder.

Optionally, the plastic layer may consists of a plastic film adhering by lamination to a carrier made of paper, board or the like, or the plastic layer can be produced on the carrier by dispersion coating techniques.

These optional procedures are also preferably carried out as a continuously operating process using web-like materials.

In accordance with the invention, a plastic layer can be connected to a carrier by means of any of the techniques mentioned above, yielding a double-layered coating material. Optionally, the plastic layer can be provided between two carrier layers, providing a triple-layered coating material.

The impregnating resin absorbed into the carrier layer can consist of phenol, amino, polyester, epoxy, vinyl ester, polyurethane or polyimide resin, a condensation polymer, such as allyl resin, or a mixture of these. During the production of the coating material, the resin is dried while leaving its curing reaction unachieved, but with the resin retaining reactivity, which is utilised during lamination of the coating material to form a sheet-like fibre-based substrate with a view to the final moisture-proof product.

With a double-layered coating material, the impregnating resin is preferably absorbed by application onto the free surface of the carrier, i.e. on the side opposite to the plastic layer. The resin is then absorbed through the carrier and contacts the plastic layer coating the carrier, while the opposite side of the plastic layer remains free from carrier. If, again, a triple-layer carrier material is formed, in which the plastic layer is located between the carrier layers, absorption is preferably performed by immersing the triple-layered web formed of plastic and carrier layers into a liquid impregnating resin, where the resin penetrates into the carrier layers simultaneously from both sides of the web.

The connection of said double-layered coating material with a rigid, fibre-based sheet-acting as a substrate is performed with the plastic layer forming an outer moisture-barrier surface of the end product. By contrast, if the coating material is triple-layered, the outer surface of the end product will consist of a carrier layer absorbed with impregnating resin and finally cured during lamination. The plastic layer forming the actual moisture barrier will be covered by this surface layer.

The moisture-proof sheet-like product obtained as the end product in accordance with the invention is suitable as a building material at any kind of object exposed to weather conditions and moisture in use, such as outhouse sheds, industrial or agricultural production and storage spaces, cattle sheds and also outdoor constructions, such as gangways and scaffolds. A resin-cured Kraft paper or similar carrier is an advantageous surface layer on the product, if the surface is exposed to strong mechanical wear, such as e.g. on a substrate surface on which vehicles or power tools move. In this case, a plastic layer acting as a moisture barrier will be covered by the wear surface on top. In other applications, a plastic layer on the surface of the product provides the most efficient moisture barrier of the product.

The invention will be explained in greater detail below by means of examples and with reference to the accompanying drawings, in which
- Figure 1: illustrates a process of the invention for producing a double-layered coating material,
- Figure 2: illustrates a second process of the invention for producing a triple-layered coating material,
- Figure 3: is a cross-sectional view of a sheet-like product obtained as the end product of the invention and equipped with the coating obtained in figure 1,
- Figure 4: is a similar view of a second sheet-like end product of the invention, which is equipped with the triple-layered coating obtained in figure 2, and
- Figure 5: is a view similar to figure 4, showing an end product equipped with a double triple-layered coating.

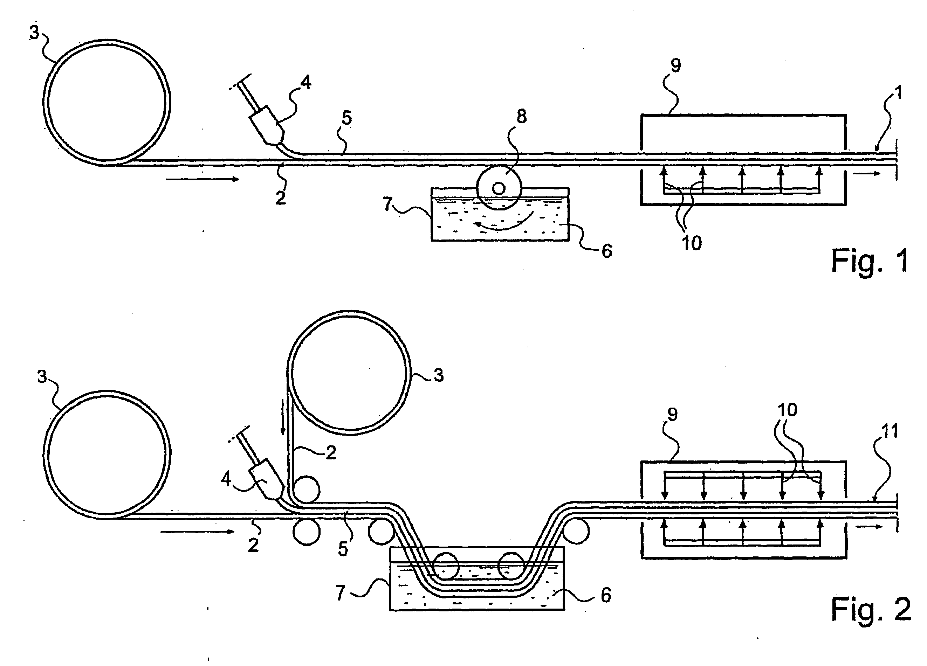

Figure 1 shows a continuously operating process for producing a coating material 1 intended as a moisture barrier for fibre-based, sheet-like end products. An absorbent carrier 2, which is e.g. Kraft paper and has a weight e.g. in the range 30 to 150 g/m², is supplied from a roll 3 as a continuous web, is coronated (not shown) and combined with a thermoplastic layer 5 extruded from an extruder 4, whose material is e.g. low-density polyethylene (LDPE) and which has a layer thickness e.g. in the range 20 to 150 g/m². The plastic layer 5 yields a waterproof coating material 1, and the plastic also increases the elasticity and mechanical resistance of the material. If desired, the plastic to be extruded can be reinforced by additions of finely divided fibre material, such as wood fibres, wood chips or sawdust. The plastic can also be coloured in order to obtain a light shield, for instance.

After the extrusion step, a reactive impregnating resin 6, e.g. phenol resin, is absorbed into the Kraft paper 2 from the side opposite to the plastic layer 5 of the web. The liquid resin 6 is in a basin 7 located on the path of the web 2 and it is applied onto the surface of the Kraft paper 2 by means of a spreader roll 8 integrated in the basin by immersion and rotating about its axis. During the spread coating, the amount of resin absorbed into the Kraft paper 2 may be in the range 30 to 150 g/m depending on the weight of the Kraft paper, and during its absorption, it penetrates through the paper layer and gets into contact with the thermoplastic layer 5 extruded on top of it.

After the impregnation step, the web is dried by means of hot air 10 blown against the impregnated Kraft paper layer 2 in a suspending drier 9. Hot air blasting pre-dries the resin 6 absorbed into the Kraft paper so that the resulting coating material 1 will be anti-adhesive and can be piled or stored in a roll. However, pre-drying leaves reactive groups in the impregnating resin, these groups being capable of continuing the cross-linking reaction at a later stage, when the coating material 1 is attached to the fibre-based sheet-like substrate in order to produce the final product.

Corresponding to figure 1, figure 2 illustrates a continuously operating process, which produces triple-layered coating material 11 for moisture-proof coating of a sheet-like product. A Kraft paper 2, which may be the same one as in the process of figure 1, is conducted as continuous webs from rolls 3, and the webs are joined in a roll nip, where a thermoplastic layer 5 is simultaneously extruded between the webs from an extruder 4. In this case as well, LDPE is a suitable plastic material 5, having a layer thickness e.g. in the range 20-150 g/m².

The triple-layered web obtained, in which the thermoplastic layer 5 is between two Kraft paper webs 2, is subsequently impregnated with a reactive impregnating resin 6 by conducting the web into an immersion basin 7. At this stage, the Kraft paper layers 2 are impregnated with resin so that the resin penetrates into contact with the plastic layer 5 on both sides. After the impregnation stage, the web is dried in a suspending drier 9 by blowing hot air 10 against the web from both sides. At this stage, resin pre-dries in the web while retaining reactivity for subsequent joining of the sheet-like substrate and the coating material 11 by lamination.

The double-layered coating material 1 resulting from the process of figure 1 comprises a continuous thermoplastic layer 5 and a layer 2 formed of Kraft paper and absorbed pre-dried impregnating resin contacted with this layer. During pre-drying, the resin has been partially cross-linked and chemically linked to the plastic layer 5 over these cross-links.

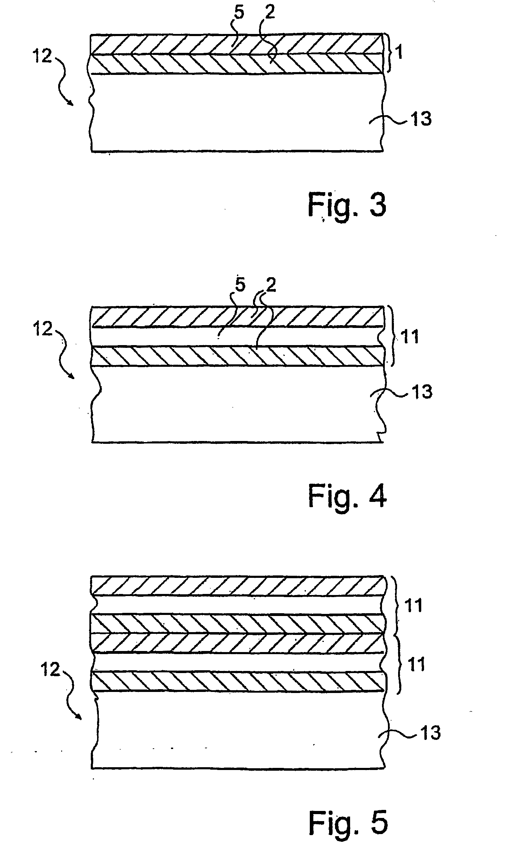

Figure 3 shows a cross-sectional view of a sheet-like end product 12, in which the coating material 1 obtained as in figure 1 has been joined by lamination to the substrate 13 formed of a rigid, fibre-based plate, such as e.g. a plywood plate. During lamination by hot pressing, the cross-linking reaction of the impregnating resin has been completed so that the resin acting as a size has adhered also to the fibrous material of the substrate 13 over the cross-links. The plastic layer 5 forming the surface of the product 12 protects the substrate 13 from moisture and imparts the product mechanical resistance and weather resistance. The product 12 is especially suitable as a material in concrete casting moulds and for walls and floors in humid spaces.

In the sheet-like product 12 of figure 4, a triple-layered coating material 11 achieved with the process of figure 2 has been laminated on the substrate 13 formed of e.g. a plywood plate. The lamination has been performed by hot pressing, in which the cross-linking reaction of the impregnating resin has been completed. In this case, the outer surface of the product 12 is formed of Kraft paper 2 impregnated with cured resin, which covers the thermoplastic layer 5. The thermoplastic 5 and the substrate 13 are spaced by a second layer 2 formed of Kraft paper and resin. The product 12 of figure 4 is suitable as a material e.g. in floors exposed to strong mechanical wear.

The product of figure 5 differs from the one in figure 4 only in that two triple-layered coatings 11 produced as in figure 2 have been laminated on top of each other on the substrate 12 of plywood.

It is obvious to those skilled in the art that the applications of the invention are not restricted to the examples given above, but may vary within the scope of the following claims. Thus for instance, in figures 1 and 2, it is possible to perform coextrusion of two or more thermoplastic layers on top of each other, with one layer containing the same of different polymers. Further, the coat spreading of the impregnating resin of figure 1 can be applied to the triple-layer web of figure 2 onto Kraft paper layers on opposite sides, with the same or different resins spread onto different sides of the web. As a variant of the end products, one can mention a sheet structure, in which a triple-layered material 11 has been achieved with a substrate, such as plywood as a coating illustrated in figure 2, and top of this, a double-layered material 1 according to figure 1, in which the plastic layer 5 forms the outer surface of the product.

## Claims

1. A method for producing a moisture-barrier coating material (1,11), **characterised in that** a plastic layer (5) is connected to a layer of an absorbent carrier (2), **in that** the carrier is subsequently treated with a reactive impregnating resin (6) so that the resin is absorbed through the carrier layer into contact with the plastic layer, and **in that** the absorbed impregnating resin is pre-dried so that there remains reactive cross-linkable groups.

2. A method as defined in claim 1, **characterised in that** a plastic layer (5) is applied onto the carrier (2) by extrusion.

3. A method as defined in claim 2, **characterised in that** a pulverised fibrous reinforcing agent is added to the plastic to be extruded.

4. A method as defined in claim 1, **characterised in that** a plastic film is applied to the carrier by lamination.

5. A method as defined in claim 1, **characterised in that** a plastic film is connected to the carrier by dispersion coating.

6. A method as defined in any of the preceding claims, **characterised in that** the plastic layer (5) is disposed between two carrier layers (2).

7. A method as defined in any of the preceding claims, **characterised in that** impregnation is performed by immersing the carrier (2) with the connected plastic layer (5) in a liquid impregnating resin (6).

8. A method as defined in any of the preceding claims 1-6, **characterised in that** impregnation is performed by applying a liquid impregnating resin (6) to the side opposite to the plastic layer (5) of the carrier (2).

9. A method as defined in any of the preceding claims, **characterised in that** the impregnating resin (6) is phenol, amino, polyester, epoxy, vinyl ester, polyurethane or polyimide resin, a condensation polymer, such as allyl resin, or a mixture of these.

10. A method as defined in any of the preceding claims, **characterised in that** the carrier (2) is an absorbent paper.

11. A method as defined in any of the preceding claims, **characterised in that** connection of the plastic layer (5) to the carrier (2) and absorption of the impregnating resin (6) into this are performed as an on-line process with the carrier web in continuous movement.

12. A coating material (1, 11) prepared by a method as defined in any of the preceding claims, **characterised in that** it comprises a carrier layer (2) impregnated with a reactive impregnating resin and a plastic layer (5) in contact with the resin, the impregnating resin having been pre-dried so that there remains reactive cross-linkable groups.

13. A material as defined in claim 12, **characterised in that** the plastic layer (5) forms the upper layer of the material (1).

14. A material as defined in claim 12, **characterised in that** the plastic layer (5) is disposed between two carrier layers (2) impregnated with impregnating resin.

15. A method as defined in claim 1 for producing a sheet-like moisture-barrier coated product (12), **characterised in that** a plastic layer (5) is connected with an absorbent carrier (2), **in that** the carrier is subsequently treated with a reactive impregnating resin (6) so that the resin is absorbed through the carrier layer into contact with the plastic layer, **in that** the absorbed impregnating resin is pre-dried so that there remains reactive, cross-linkable groups, and **in that** the layered coating material (1, 11) thus obtained is bonded to a rigid fibre-based plate (13) under heat und pressure, the cross-linkable impregnating resin contained in the carrier layer (2) contacted with the plate surface acting as a binder between the coating (1, 11) and the plate (13).

16. A method as defined in claim 15, **characterised in that** the carrier (2) is an absorbent paper.

17. A method as defined in claim 15 or 16, **characterised in that** the plate (13) to be equipped with a coating (1, 11) is wood or a wood panel, such as plywood, OSB, chipboard or fibreboard.

## Patentansprüche

1. Verfahren zur Herstellung eines Feuchtigkeitssperrenbeschichtungsmaterials (1, 11), **dadurch gekennzeichnet, dass** eine Kunststoffschicht (5) mit einer Schicht aus einem absorbierenden Träger (2) verbunden wird, dass der Träger danach mit einem reaktiven Imprägnierharz (6) behandelt wird, so dass das Harz von der Trägerschicht absorbiert wird und so in Kontakt mit der Kunststoffschicht kommt und dass das absorbierte Imprägnierharz vorgetrocknet wird, so dass noch reaktive, vernetzbare Gruppen verbleiben.

2. Verfahren nach Anspruch 1, **dadurch gekennzeichnet, dass** eine Kunststoffschicht (5) durch Extrusion auf den Träger (2) aufgebracht wird.

3. Verfahren nach Anspruch 2, **dadurch gekennzeichnet, dass** dem zu extrudierenden Kunststoff ein pulverisiertes faseriges Verstärkungsmittel hinzugefügt wird.

4. Verfahren nach Anspruch 1, **dadurch gekennzeichnet, dass** eine Kunststofffolie durch Laminieren auf den Träger aufgebracht wird.

5. Verfahren nach Anspruch 1, **dadurch gekennzeichnet, dass** ein Kunststofffilm durch Dispersionsbeschichten mit dem Träger verbunden wird.

6. Verfahren nach einem der vorangehenden Ansprüche, **dadurch gekennzeichnet, dass** die Kunststoffschicht (5) zwischen zwei Trägerschichten (2) angeordnet wird.

7. Verfahren nach einem der vorangehenden Ansprüche, **dadurch gekennzeichnet, dass** das Imprägnieren durch Eintauchen des Trägers (2), mit der damit verbundenen Kunststoffschicht (5), in ein flüssiges Imprägnierharz (6) erfolgt.

8. Verfahren nach einem der vorangehenden Ansprüche 1-6, **dadurch gekennzeichnet, dass** das Imprägnieren durch Aufbringen eines flüssigen Imprägnierharzes (6) auf die der Kunststoffschicht (5) entgegengesetzte Seite des Trägers (2) erfolgt.

9. Verfahren nach einem der vorangehenden Ansprüche, **dadurch gekennzeichnet, dass** das Imprägnierharz (6) Phenol-, Amino-, Polyester-, Epoxid-, Vinylester, Polyurethan- oder Polyimidharz, ein Kondensationspolymer, wie Allylharz, oder ein Gemisch aus diesen ist.

10. Verfahren nach einem der vorangehenden Ansprüche, **dadurch gekennzeichnet, dass** der Träger (2) ein absorbierendes Papier ist.

11. Verfahren nach einem der vorangehenden Ansprüche, **dadurch gekennzeichnet, dass** das Verbinden der Kunststoffschicht (5) mit dem Träger (2) sowie die Absorption des Imprägnierharzes (6) in den Träger als Online-Prozess erfolgen, wobei die Trägerbahn kontinuierlich bewegt wird.

12. Beschichtungsmaterial (1, 11), hergestellt durch ein Verfahren nach einem der vorangehenden Ansprüche, **dadurch gekennzeichnet, dass** es eine Trägerschicht (2), die mit einem reaktiven Imprägnierharz imprägniert ist, und eine Kunststoffschicht (5), die mit dem Harz in Kontakt ist, umfasst, wobei das Imprägnierharz vorgetrocknet wurde, so dass noch reaktive, vernetzbare Gruppen verbleiben.

13. Material nach Anspruch 12, **dadurch gekennzeichnet, dass** die Kunststoffschicht (5) die obere Schicht des Materials (1) bildet.

14. Material nach Anspruch 12, **dadurch gekennzeichnet, dass** die Kunststoffschicht (5) zwischen zwei, mit Imprägnierharz imprägnierten Trägerschichten (2) angeordnet ist.

15. Verfahren nach Anspruch 1 zur Herstellung eines flächigen, mit einer Feuchtigkeitssperre beschichteten Produkts (12), **dadurch gekennzeichnet, dass** eine Kunststoffschicht (5) mit einem absorbierenden Träger (2) verbunden wird, dass der Träger danach mit einem reaktiven Imprägnierharz (6) behandelt wird, so dass das Harz von der Trägerschicht absorbiert wird und so in Kontakt mit der Kunststoffschicht kommt, dass das absorbierte Imprägnierharz vorgetrocknet wird, so dass noch reaktive, vernetzbare Gruppen verbleiben, und dass das so erhaltene geschichtete Beschichtungsmaterial (1, 11) mit einer starren faserbasierten Platte (13) unter Wärme und Druck verbunden wird, wobei das vernetzbare Imprägnierharz, das in der mit der Oberfläche der Platte in Kontakt gebrachten Trägerschicht (2) enthalten ist, als ein Bindemittel zwischen der Beschichtung (1, 11) und der Platte (13) wirkt.

16. Verfahren nach Anspruch 15, **dadurch gekennzeichnet, dass** der Träger (2) ein absorbierendes Papier ist.

17. Verfahren nach Anspruch 15 oder 16, **dadurch gekennzeichnet, dass** es sich bei der mit einer Beschichtung (1, 11) auszurüstenden Platte (13) um Holz oder ein Holzpaneel handelt, wie beispielsweise Sperrholz, eine OSB-Platte, Spanplatte oder Faserplatte.

## Revendications

1. Procédé de fabrication un matériau de revêtement (1, 11) formant barrière contre l'humidité, **caractérisé en ce qu'**une couche de matière plastique (5) est reliée à une couche d'un substrat absorbant (2), que ledit substrat est ensuite traité à l'aide d'une résine réactive d'imprégnation (6), de telle sorte que ladite résine soit absorbée à travers la couche de substrat pour venir en contact avec la couche de matière plastique, et que la résine d'imprégnation absorbée est séchée préalablement de façon qu'il subsiste des groupes réactifs réticulables.

2. Procédé selon la revendication 1, **caractérisé en ce qu'**une couche de matière plastique (5) est appliquée sur le substrat (2) par extrusion.

3. Procédé selon la revendication 2, **caractérisé en ce qu'**un agent de renforcement fibreux pulvérisé est ajouté à la matière plastique devant être extrudée.

4. Procédé selon la revendication 1, **caractérisé en ce qu'**un film de matière plastique est appliqué sur le substrat par laminage.

5. Procédé selon la revendication 1, **caractérisé en ce qu'**un film de matière plastique est relié au substrat par revêtement de dispersion.

6. Procédé selon l'une quelconque des revendications précédentes, **caractérisé en ce que** la couche de matière plastique (5) est interposée entre deux couches de substrat (2).

7. Procédé selon l'une quelconque des revendications précédentes, **caractérisé en ce qu'**une imprégnation est effectuée par immersion du substrat (2), avec la couche de matière plastique (5) reliée, dans une résine liquide d'imprégnation (6).

8. Procédé selon l'une quelconque des revendications précédentes 1-6, **caractérisé en ce qu'**une imprégnation est effectuée par dépôt d'une résine liquide d'imprégnation (6) sur la face du substrat (2) opposée à la couche de matière plastique (5).

9. Procédé selon l'une quelconque des revendications précédentes, **caractérisé en ce que** la résine d'imprégnation (6) est une résine phénolique, aminoplaste, de polyester, d'époxyde, d'ester vinylique, de polyuréthane ou de polyimide, un polymère de condensation tel qu'une résine allylique, ou un mélange de ces derniers.

10. Procédé selon l'une quelconque des revendications précédentes, **caractérisé en ce que** le substrat (2) est un papier absorbant.

11. Procédé selon l'une quelconque des revendications précédentes, **caractérisé en ce qu'**une liaison de la couche de matière plastique (5) avec le substrat (2), et une absorption de la résine d'imprégnation (6) dans ce dernier, sont effectuées sous la forme d'un processus en ligne avec mouvement continu de la nappe de substrat.

12. Matériau de revêtement (1, 11) élaboré par un procédé conforme à l'une quelconque des revendications précédentes, **caractérisé en ce qu'**il comprend une couche de substrat (2) imprégnée par une résine réactive d'imprégnation, et une couche de matière plastique (5) en contact avec ladite résine, la résine d'imprégnation ayant été séchée préalablement de façon qu'il subsiste des groupes réactifs réticulables.

13. Matériau selon la revendication 12, **caractérisé en ce que** la couche de matière plastique (5) forme la couche supérieure dudit matériau (1).

14. Matériau selon la revendication 12, **caractérisé en ce que** la couche de matière plastique (5) est interposée entre deux couches de substrat (2) imprégnées de résine d'imprégnation.

15. Procédé selon la revendication 1, de fabrication d'un produit revêtu (12) du type feuille, formant barrière contre l'humidité, **caractérisé en ce qu'**une couche de matière plastique (5) est reliée à un substrat absorbant (2), que ledit substrat est ensuite traité à l'aide d'une résine réactive d'imprégnation (6), de telle sorte que ladite résine soit absorbée à travers la couche de substrat pour venir en contact avec la couche de matière plastique, que la résine d'imprégnation absorbée est séchée préalablement de façon qu'il subsiste des groupes réactifs réticulables, et que le matériau stratifié de revêtement (1, 11) ainsi obtenu est combiné avec une plaque rigide (13) à base de fibres, sous l'action de la chaleur et de la pression, la résine réticulable d'imprégnation, renfermée par la couche de substrat (2) en contact avec la surface de la plaque, agissant comme un liant entre le revêtement (1, 11) et ladite plaque (13).

16. Procédé selon la revendication 15, **caractérisé en ce que** le substrat (2) est un papier absorbant.

17. Procédé selon la revendication 15 ou 16, **caractérisé en ce que** la plaque (13), devant être pourvue d'un revêtement (1, 11), est en bois ou en un panneau de bois du type contreplaqué, OSB, panneau de particules ou panneau de fibres.
